# EUROPEAN PATENT SPECIFICATION

(11) **EP 3 838 381 B1**
(45) Date of publication and mention of the grant of the patent: **02.08.2023**
(21) Application number: 20199666.7
(22) Date of filing: 01.10.2020
(51) Int. Cl.: B01D 53/52, B01D 53/78, C01B 17/64, B01D 53/14

(54) **PROCESS FOR THE PRODUCTION OF AMMONIUM THIOSULFATE**
VERFAHREN ZUR HERSTELLUNG VON AMMONIUMTHIOSULFAT
PROCÉDÉ DE PRODUCTION DE THIOSULFATE D'AMMONIUM

(30) Priority: 17.12.2019 EP 19217078
(43) Date of publication of application: 23.06.2021
(73) Proprietor: Stercorat Hungary Kft., 1137 Budapest (HU)
(72) Inventor: HAJDU, Marek, 90042 Miloslavov (SK); LEHOCKÝ, Miroslav, 971 01 Prievidza (SK)
(74) Representative: Schwarz & Partner Patentanwälte GmbH

(56) References cited:
- EP-A1- 0 928 774
- EP-A1- 1 392 415
- US-A1- 2003 039 606
- US-A1- 2008 050 302

## Description

### TECHNICAL FIELD

The present invention relates to the field of treating waste refinery gases into nitrogen and sulfur-containing compounds.

### BACKGROUND ART

At present, refineries remove naturally occurring nitrogen and sulfur compounds from crude oil to produce concentrated waste gases containing hydrogen sulfide and ammonia. These gases can also be generated by natural gas processing, coal gasification, coke or biomass gasification.

Regulatory requirement towards sulfur content reduction in diesel and gasoline as well as deeper hydrocracking of feedstocks forces refineries to deal with the increased requirements for the disposal of the waste gases. The resulting waste gases are typically treated in one or more sulfur recovery units to produce liquid sulfur while burning ammonia.

The Claus SRU (Sulphur Recovery Unit) process is the most common way to treat refinery off-gases and is generally used as the main process to limit the emission of SO₂ to air. The waste gas from an SRU may be further treated in a Tail Gas Treating Unit. For this purpose, a Scot process is generally used which utilizes the thermal reduction of waste gas from an SRU to form hydrogen sulfide, which is recirculated back to the SRU. However, the process directly and significantly loads capacity. Due to stringent environmental requirements, many emerging SO₂ recovery processes have been developed. Most of them require addition of alkaline additives while producing waste products, which are subject to additional disposal costs.

As an alternative or in parallel to the Claus SRU process, waste gas is processed using ammonium thiosulfate (ATS), ammonium hydrogensulphite (ABS; ammonium bisulphite) and ammonium sulphite (DAS; diammonium sulphite) as an absorption solution for the absorption of SO₂. Thereby, a sulphite solution comprising ABS and DAS is formed, which is contacted with a feed gas from a sour water stripping unit ("sour water stripper gas", "SWSG") containing H₂S ("SWSG - H₂S") and NH₃ ("SWSG-NH₃") to form ATS without the addition of external ammonia ("NHs-Ext"). The disadvantage of these processes is the indirect control of the pH of the solutions and thus the reduced absorption efficiency for SO₂ as well as the limitation of the production volume of ATS to the amount of NH₃ in the SWSG.

The technology of Tessenderlo Kerley, Inc. (US 7,824,652), for instance, uses external ammonia and utilizes two separate absorption circuits, wherein in the first circuit SO₂ is absorbed to produce a highly concentrated sulphite solution comprising ABS and DAS, which is subsequently utilized in a second absorption circuit to react with SWS gas to form ATS.

EP 0 928 774 A1 discloses a process for the continuous production of ATS from H₂S, SO₂ and NH₃, comprising two absorption steps. In a first absorption step a solution of ammonium hydrogen sulphite is produced and in a second absorption step a solution rich in ammonium thiosulphate is produced.

US 2003/0039606 A1 relates to a further process for producing ATS.

US 2008/0050302 A1 discloses a process for the production of ammonium thiosulfate from gas streams comprising ammonia and hydrogen sulfide.

### SUMMARY OF THE INVENTION

The present invention relates to a continuous process for the production of ammonium thiosulfate (ATS) using a solution comprising ammonium hydrogen sulphite (ABS; ammonium bisulphite) and ammonium sulphite (DAS; diammonium sulphite) as the primary absorbing agent and external ammonia (NH₃) for achieving a high absorption efficiency of sulfur dioxide (SO₂) resulting from the combustion of hydrogen sulphide from AG (amine gas from amine treating unit, referred to as "H₂S-100%") or SWSG (sour water stripper gas from sour water stripper unit). The solution comprising ABS and DAS forms a buffering capacity in the system, a buffer which, after addition of a strong acid or base, is capable of maintaining a stable pH within a certain range, utilizing the absorption of acidic SO₂ or basic NH₃ gas. The solution comprising ABS and DAS is circulated through the absorption system where it provides absorption and reaction with the SWS gas. Said method provides an efficient manufacturing method for ATS while relieving capacity of the SRU.

Hence, the present invention relates to a method for producing ammonium thiosulfate comprising the steps of
a) contacting in a first reactor a first gas stream comprising hydrogen sulphide and ammonia with a first circulating aqueous solution comprising ammonium bisulphite and diammonium sulphite to produce a first aqueous effluent solution comprising ammonium thiosulfate and a first flue gas stream comprising residual hydrogen sulphide and ammonia from said first gas stream;
b) contacting in a second reactor the first flue gas stream with a third aqueous solution comprising ammonium bisulphite, diammonium sulphite and ammonia to produce a second aqueous solution comprising ammonium thiosulfate, ammonium bisulphite, diammonium sulphite and ammonia, and a second flue gas stream;
c) combusting in a third reactor the second flue gas stream of step b) and a second gas stream comprising hydrogen sulphide to produce a third flue gas stream comprising SO₂ with N₂ and NOₓ;
d) contacting in a fourth reactor the third flue gas stream of step c) with said second aqueous solution to produce a second aqueous effluent solution comprising ammonium bisulphite and diammonium sulphite, wherein one part of the second aqueous effluent solution is fed into the first reactor and one part of the second aqueous effluent solution is mixed with ammonia to produce said third aqueous solution, which is flowed into said second reactor, and wherein said first aqueous effluent solution is at least partially used as the first circulating aqueous solution.

It turned out that with the method of the present invention, H₂S and NH₃ present in SWSG, for instance, can be highly efficiently converted into ATS. One of the major advantages of the claimed method is that substantially all of the H₂S and NH₃ comprised within a gas is removed from the gas stream reducing the amount of harmful components in the flue gas.

In a first step of the method of the present invention, a first gas stream comprising H₂S and NH₃ is contacted in a first reactor with an aqueous solution comprising ABS and DAS to produce a first aqueous effluent solution comprising ATS. Said aqueous solution may comprise already some amount of ATS and said first aqueous effluent solution may comprise ABS and DAS.

The flue gas formed during the first step may comprise residual unreacted H₂S and NH₃, which could not be washed out from the first gas stream using said aqueous solution comprising ABS and DAS.

In a second step of the method of the present invention the flue gas from the first step is contacted in a second reactor with a solution comprising ammonium bisulphite, diammonium sulphite and ammonia (herein also referred to as "third solution") to produce further ATS. The solution flowing out of the second reactor is herein referred to as "second aqueous solution".

The unreacted flue gas leaving the second reactor (referred to as "second flue gas stream") is combined with a second gas stream of H₂S ("H₂S-100%"). This combined gas stream is combusted in a third reactor to SO₂ with NOₓ, N₂ and H₂O using oxygen or air. Since SO₂ is required to obtain in a fourth reactor an aqueous solution comprising ABS and DAS, the second gas stream substantially consists of H₂S. This is advantageous because it reduces the amount of NOₓ in the flue gas.

In a fourth reactor, the flue gas obtained in the third step comprising SO₂, NOₓ, N₂ and H₂O is contacted with a second aqueous solution comprising NH₃ (from "SWSG - NH₃" or external NH₃). SO₂ and NH₃ react in the presence of water to ABS and DAS ("second aqueous effluent solution"), which is required for the formation of ATS in the presence of H₂S. In order to increase the concentration of NH₃ in the second aqueous solution, NH₃ is added to a part of the second aqueous effluent solution to produce a third solution. The addition of NH₃ has the advantage to provide sufficient NH₃ to be reacted with SO₂ to form ABS and DAS and to adjust the pH of the second circulating aqueous solution allowing an efficient removal of H₂S from the first gas stream.

The main advantage of the method described herein is that the solution comprising ATS, ABS and DAS also absorbs very low concentrations of SO₂ at a very high absorption efficiency. This highly flexible production process allows for the highly efficient recovery of sulfur and nitrogen components from the feed gas streams (SWSG or AG ("H₂S-100%")), resulting in lower environmental emission limits for SO₂ to the atmosphere. Furthermore, the produced solution comprising ATS, ABS and DAS is a commercial product. In the normal operating mode, the sulphite solution comprising ABS and DAS is not formed as an intermediate in the separated loop for the next reaction to form ATS alone but is made up of one producing loop. The resulting high sulphite solution comprising ATS, ABS and DAS is used in a separate absorption system to absorb and react with H₂S and NH₃ from SWSG to form ATS with a low concentration of sulphites ABS and DAS. To achieve optimum sulfur recovery efficiency, the process uses a unique flow scheme to control the pH of solutions (by adding NH₃), sulphite concentration (ASB and DAS) and concentration of ATS in a single circulating solution loop via two separate absorber systems with simultaneous flow control between them. The present invention is not limited by the available NH₃ in the feed gas (SWSG). This process is highly flexible and controllable with additional ammonia (aqueous NH₃), supplied as needed to ensure sufficient sulphite concentration (ABS and DAS) and control to the pH of the process, and additional hydrogen sulphide from AG (amine gas from amine treating unit) referred to as "H₂S-100%").

The process has many advantages such as:
1.) use part or all of the ammonia ("SWSG - NH₃") from feed gas (SWSG)
2.) capacity increase of the SRU by diverting part of the feed gas from the SRU to the production unit for ATS,
3.) high sulfur recovery efficiency to meet emission limits,
4.) high flexibility of feedstock (i.e. feed gas) composition,
5.) much less dependence on the pH of solutions than other manufacturing processes for ATS using a solution comprising ATS, ABS and DAS as the primary absorbent.

The final product obtainable with the process of the present invention and comprising ATS may be controlled to contain ATS in a concentration of 40 wt% to 60 wt%, preferably 50 wt% to 60 wt% ATS, which is primarily used for agricultural purposes, either alone or in combination with commonly used liquid fertilizers. In particular, the final product may further contain 9.0-12.5 wt% nitrogen, preferably 11.5-13.5 wt% nitrogen, and 19.5-26.5 wt% sulfur, also referred to as 40-60 wt% ATS.

### BRIEF DESCRIPTION OF THE FIGURES

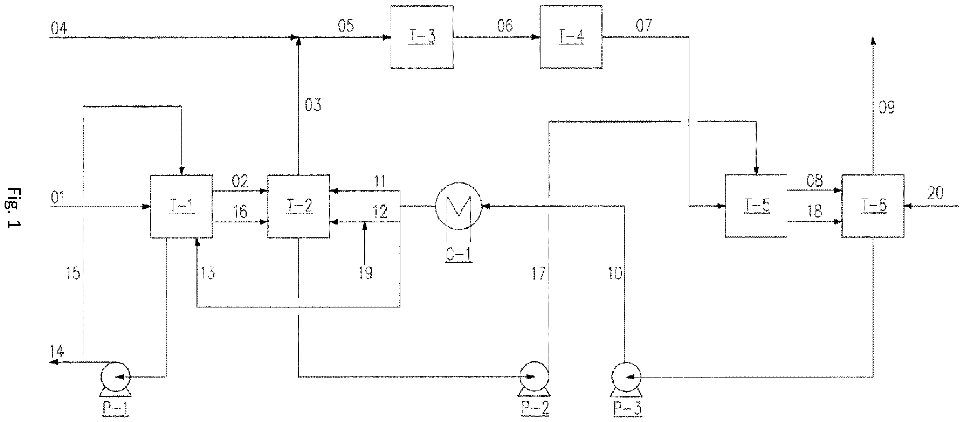

Fig. 1 is a diagram of an embodiment of the method of the present invention.

### DESCRIPTION OF EMBODIMENTS

According to a preferred embodiment of the present invention, the ammonia used in step d) is aqueous ammonia. Said aqueous ammonia may originate from an external source. According to the present invention, ammonia is added to one part of the second aqueous effluent solution to produce a third solution. Said ammonia is added before the third solutions enters the second reactor.

According to the present invention, the first aqueous effluent solution is at least partially used as the first aqueous solution.

The first aqueous effluent obtainable in the first step of the method of the present invention is at least partly reused to be contacted with the first gas stream in order to increase the concentration of ATS in the effluent. Another part of the first effluent is removed from the process to obtain the final product of the claimed method comprising ATS.

In a particularly preferred embodiment of the present invention the first aqueous effluent solution can be used continuously as first circulating aqueous solution or part thereof until a certain level of ATS within the first aqueous effluent solution is achieved.

According to another preferred embodiment of the present invention the first gas stream is contacted with the first aqueous solution using a nozzle or absorber.

In order to maximize the absorption of H₂S and/or NH₃ from the first gas stream into the first circulating aqueous solution a nozzle or an absorber is used. Both have the advantage to distribute the gas within the aqueous solution.

According to a further preferred embodiment of the present invention the third flue gas stream is contacted with the second aqueous solution using also a nozzle or absorber.

According to a preferred embodiment of the present invention step a) is performed at a temperature from 30°C to 95°C, preferably from 50°C to 90°C, more preferably from 55°C to 70°C.

It turned out that H₂S and/or NH₃ show the most efficient reaction rates when a temperature from 30°C to 95°C, in particular 55°C to 70°C, is applied.

The unreacted gas leaving the first reactor ("first flue gas stream") reacts to ATS in the second reactor. Still unreacted gas ("second flue gas steam") leaves the second reactor. In order to remove all or almost all water from the second flue gas stream, the second flue gas stream may preferably pass a droplet separator separating the liquid portion from the gaseous portion before being combusted.

According to a particularly preferred embodiment of the present invention, the first gas stream comprises or consists of SWSG.

According to a further preferred embodiment of the present invention, the second gas stream consists of hydrogen sulphide from amine gas (AG). Herein, the hydrogen sulphide from amine gas is also referred to as "H₂S-100%".

To ensure sufficient absorption of gaseous SO₂ into a solution comprising sulphites (ABS and DAS) followed by reaction to form ABS and DAS, the process uses an SO₂ absorber. To ensure sufficient absorption of gaseous H₂S and NH₃ from SWSG into solution (ATS) containing sulphites (ABS + DAS) followed by reaction to form (ATS), the process uses an ATS reactor. A solution (ATS + ABS + DAS) is continuously circulated through absorption systems to ensure the absorption of the gaseous components. The whole circulation loop uses one heat exchanger (cooler), which ensures a stable temperature of the absorption solutions and two circulation pumps with a standby position. The whole system creates one large loop with different concentrations for ATS and for ABS and DAS in the different parts of the system. Given this fact, the invention differs to a large extent from conventional manufacturing processes for ATS, which utilize two separate absorption loops. It was found that at higher production loads for ATS respectively at high amounts of SO₂ treated, excessive degradation of the solutions results in ammonium sulphate due to the low pH. In this case, the process can be easily stabilized by adding ammonia. Because of the ability to stabilize the process, the process is very versatile and adaptable to different amounts and compositions of feedstocks. Absorption efficiency of SO₂ is particularly high because the absorption solution comprising ATS, ABS and DAS ("second aqueous solution") is controlled to a pH in the range of 5.0 - 7.0, preferably 6.0 - 7.0. Any unabsorbed SO₂ and/or SO₃ gas may be further absorbed in a residual SO₂ absorber by the same solution. The sulphite-rich solution comprising ATS, ABS and DAS ("second aqueous effluent solution") is then partly circulated into an ATS production part ("first reactor") where H₂S and NH₃ from the feed gas SWSG react with ABS and DAS to form ATS.

The method of the present invention allows to produce a solution which comprises a relatively high level of ATS.

The composition obtainable with the method of the present invention ("first aqueous effluent solution)" comprises preferably 40 wt% to 60 wt% ammonium thiosulfate, more preferably 50 wt% to 55 wt% thiosulfate.

According to a preferred embodiment of the inventive method, the first aqueous effluent solution comprises 0.5 wt% to 10 wt%, preferably 1.5 wt% to 5 wt%, more preferably 2 wt% to 8 wt% ammonium bisulphite and diammonium sulphite.

According to a further preferred embodiment of the present invention, the first aqueous effluent solution comprises 0.5 wt% to 10 wt%, preferably 1.5 wt% to 9.5 wt%, more preferably 4 wt% to 6 wt%, ammonium sulphate.

The pH of the composition of the present invention ranges preferably from 6 to 8, more preferably from 6 to 7.

Disclosed is a method comprising the steps of:
a) contacting a first gas stream comprising hydrogen sulphide and ammonia with a first circulating aqueous solution comprising ammonium bisulphite and diammonium sulphite to produce a first aqueous effluent solution comprising ammonium thiosulfate and a first flue gas stream comprising residual hydrogen sulphide and ammonium from said first gas stream;
b) combusting the first flue gas stream of step a) and a second gas stream comprising hydrogen sulphide and ammonium to produce a second flue gas stream comprising SO₂ with N₂ and NOₓ;
c) contacting the second flue gas stream of step b) with a second aqueous solution comprising ammonia to produce a second aqueous effluent comprising ammonium bisulphite and diammonium sulphite, wherein one part of the second aqueous effluent is contacted with aqueous ammonia and used as the second aqueous solution and one part of the second aqueous effluent is used as or fed into the first aqueous solution.

Fig. 1 shows the basic process flow diagram. Both the amine regeneration unit and the sour water stripping unit are not shown in the diagram for simplicity. The SWSG **stream 01** enters and is absorbed into the circulating solution in the ATS reactor system **T-1** according to the reaction:

**H₂S (g) ↔ H₂S (aq)**

**NH₃ (g) - NH₃ (aq)**

**H₂S (aq) + NH₃ (aq) - (NH₄)HS (aq)**

and then reacts with the sulphite solution comprising ABS and DAS to form ATS according to the reaction:

**2(NH₄)HS (aq)) + 4 (NH₄)HSO₃ (aq) -> 3(NH₄)₂S₂O₃ (aq) + 3H₂O(l)**

"g" stands for gaseous, "aq" stands for aqueous and "l" stands for liquid.

In all circulating solutions, however, the sulphite equilibrium is maintained according to the reaction:

**(NH₄)HSO₃ (aq) + NH₃ (aq) <-> (NH₄)₂SO₃ (aq)**

depending on pH and solution temperature.

It is necessary to mention that there is also a reaction:

**2H₂S (aq) + 4(NH₄)₂SO₃ (aq) -> 3(NH₄)₂S₂O₃ (aq) + 2NH₃ (aq) + 3H₂O (l).**

Both ATS forming reactions have a high equilibrium constant of approximately K_{eq} = 10¹² and are therefore virtually irreversible and run in one direction only. Since ammonia (NH₃) is a very weak base, the resulting solution will always contain a very low concentration of sulphide ions (S²⁻) resulting from the reactions:

**H₂S (aq) + H₂O (l) <-> HS⁻ (aq) + H₃O⁺ (aq)**

**HS⁻ (aq) + H₂O (l) <-> S²⁻ (aq) + H₃O⁺ (aq)**

**2NH₄⁺ (aq) + S²⁻ (aq) <-> (NH₄)₂S (aq)**

If the sulphite concentration (ABS and DAS) is very low (<1 wt%) and the pH of the circulating solutions is high (> 9.0), (NH₄)₂S will be formed to a significant extent with the consequent formation of polysulfides according to the reaction:

**(NH₄)₂S (aq) + (n-1)S (s) <-> (NH₄)₂Sn (aq, s)**

resulting in the colouring of the solutions to grey-black ("s" means solid).

This fact can serve as an initial indication of insufficient sulphite concentration (ABS and DAS) in solutions. Solution circulation for the ATS reactor **T-1** is provided by pumps **P-1.** A buffer tank can be included and ATS circulation loop can be created by pump **P-1** and **stream 15** to boost the ATS reaction in **T-1.** Absorption of NH₃ from feed gas SWSG ("SWSG - NH₃") increases the pH, causing an increase in absorption of H₂S from feed gas SWSG ("SWSG - H₂S") and thus formation of ATS as well as adjusting the pH of the final product that is drawn into the storage by **stream 14.** The concentration of sulphites (ABS and DAS) in the final product is in the range of 1.5 - 5.0 wt.% not less than 1.0 wt.% to ensure complete reactivity of any dissolved H₂S from the feed gas. The content of ATS is controlled so that the final product comprises 40 - 60 wt%, preferably 50 - 60 wt%, ATS and 1.5 - 9.5 wt%, preferably 4 - 6 wt%, ammonium sulphate, which represents 9.0 - 12.5 wt%, preferably 11.5 - 13.5 wt% nitrogen and 19,5 - 26.5 wt%, preferably 24.5-26.5 wt%, sulphur. The pH in the final product ranges from 6.5 - 7.8, preferably from 7.0 - 7.2.

To provide a sufficient amount of sulphites (ABS and DAS) required for the formation of ATS, a solution with a higher sulphite content (ABS and DAS) **stream 13** is delivered into **T-1.** A part of stream 13 solution after mixing in **T-1** flows freely into **T-2** as **stream 16.** The circulation flow of solution **stream 15** through **T-1** is the reactive amount of ABS and DAS with SWSG - H₂S and SWSG - NH₃ to form ATS. Due to this fact, it is possible to easily adjust the amount of reacted H₂S and NH₃ from the feed gas and thus the quantity of produced ATS by adjusting the flow of stream 15. In general, the higher the temperature of the solution flowing in the ATS circulation loop, the less absorption of SWSG - H₂S and SWSG - NH₃ from the feed gas into the solution. On the other hand, the higher the temperature of the solution, the faster the reaction of SWSG - H₂S and SWSG - NH₃ from the feed gas for the ATS formation. Optimal temperature in the ATS reactor is 60 - 90 °C, preferably 60 - 80 °C.

If the feed gas rate is greater than the ability of the solution to absorb it, unreacted feed gas **stream 02** further enters into the buffer pressure tank **T-2.** In **T-2,** unreacted feed gas SWSG is exposed to the higher sulphite content solution (ABS and DAS) **stream 11.** The solution **stream 11** flowing through **T-2** reacts with unreacted SWSG from **T-1** to form ATS as in **T-1.** Due to this fact, it is possible to easily adjust the amount of unreacted SWSG from **T-1** and thus the quantity of produced ATS. A droplet separator may be installed on the top of **T-2** to protect combustion plant **T-3.** Gas flowing from top **T-2 (stream 03)** is mixed with H₂S gas **stream 04** flowing from the amine treating unit. The mixture **stream 05** further enters a combustion plant **T-3** consisting of an acid gas burner and a reaction furnace. In **T-3,** in the presence of an excess of oxygen, the reactions proceed as follows:

**2H₂S (g) + 3O₂ (g) -> 2SO₂ (g) + 2H₂O (g)**

**2SO₂ (g) + O₂ (g) -> ₂SO₃ (g)**

**4NH₃ (g) + 3O₂ (g) -> 2N₂ (g) + 6H₂O (g)**

**4NH₃ (g) + 5O₂ (g) -> 4NO (g) + 6H₂O (g)**

**4NH₃ (g) + 7O₂ (g) -> 4NO₂ (g) + 6H₂O (g)**

The amount of SO₃ produced can depend on the combustion temperature at **T-3,** where the amount of SO₃ produced for combustion temperatures of 1 100 - 1 500 °C is estimated to be 1-8% of the total amount produced SO₂. The resulting stream comprising SO₂ and SO₃, also containing NOₓ, N₂, O₂ and H₂O, also referred to as the flue gas stream, is fed to the Waste Heat Boiler **T-4** where it is cooled to 260 - 320 °C. The flue gas flow temperature downstream **T-4** must not drop below the flue gas acid dew point of about 200 °C, since sulphuric acid (H₂SO₄) would form and excessive corrosion would occur on the system. In **T-4,** by cooling the flue gas **stream 06,** steam is produced, which can be used for internal process consumption or supplied as an energy source. An air blower can be used in the process to provide sufficient oxygen in **T-3** for combustion. The flue gas stream from **T-4, stream 07,** is absorbed into the circulating solution in the SO₂ absorption system **T-5** to form ABS and DAS according to the reaction:

**SO₂ (g) <-> SO₂ (aq)**

**SO₂ (aq) + H₂O (1) <-> H₂SO₃ (aq)**

**H₂SO₃ (aq) + NH₃ (aq) <-> (NH₄)HSO₃ (aq)**

**(NH₄)HSO₃ (aq) + NH₃(aq) <-> (NH₄)₂SO₃ (aq)**

Since the flue gas stream also contains SO₃, ammonium sulphate is formed according to the reaction:

**SO₃ (g) + H₂O (l) <-> H₂SO₄ (aq)**

**2NH₃ (aq) + H₂SO₄ (aq) -> (NH₄)₂SO₄ (aq)**

The presence of O₂ also causes oxidation of ABS and DAS according to the reaction:

**2 (NH₄)HSO₃ (aq) + O₂ (g) + 2NH₃ (aq) -> 2 (NH₄)₂SO₄ (aq)**

**2(NH₄)₂SO₃ (aq) + O₂ (g) -> 2(NH₄)₂SO₄ (aq)**

The formation of ammonium sulphate may significantly reduce the concentration of NH₃ in the solutions, resulting in a decrease in formation of ABS and DAS. For this reason, the formation of ammonium sulphate is undesirable. It is not possible to completely prevent the formation of ammonium sulphate. Circulation of the solution through **T-5** is provided by pumps **P-2 stream 17.** Absorption of SO₂ in **T-5** lowers the pH in the circulating solution, and that is why ammonia ("NH₃ - Ext") **stream 19** is added to the circulation solution.

The addition of ammonia allows to control the pH of all solutions circulating in the system easily and thereby control the formation of ABS and DAS. By controlling the pH of the circulating solutions, up to 99.5% SO₂ absorption in **T-5** by **stream 17** can be achieved. Addition of ammonia ("NH₃ - Ext") is controlled by the pH of stream 10 and to keep the pH of stream 10 under control, all SO₂ and SO₃ from stream 07 must react with ammonia ("NH₃ - Ext") or any other ammonia contained in stream 17. Circulating solution from T-5 **stream 18** flows freely to T-6. The solution comprising ABS and DAS of higher concentration is then transported by pump **P-3 stream 10** through a heat exchanger **C-1,** which ensures a stable temperature of the absorption solutions to **T-1** and **T-2.** One-part flows into the ATS reactor **(stream 13)** and one part flows to buffer tank **T-2 (stream 12),** where ABS and DAS react to ATS. **Stream 11** is introduced into **T-2** just to balance circulation loop. Ammonia ("NH₃ - Ext") **stream 19** is introduced to **T-2** via stream 12 to ensure sufficient mixing of both streams before entering **T-5.** The flow rate of the circulating solutions is in the range of 50 times, preferably 70 times, higher than the produced amount of ATS. The pH of the circulating solution to **T-5** is in the range of 6.0 - 7.0. The pH of the circulating solution from **T-5** and **T-6** is in the range of 5.0 - 7.0, preferably in the range of 5.7 to 6.0. Small portion of absorbed SO₂ or NH₃ from T-5 is released from the solution as **stream 08,** depending on the pH of the solution. At a pH of circulating solutions 5.8, it is released from the solution preferentially SO₂ and the release NH₃ is minimal. At a pH of circulating solutions >5.8, it is released from the solution preferentially NH₃ and the release SO₂ is minimal. The two absorbed components are in equilibrium i.e. their release from solution is at least about pH 5.8. At very low pH in the system (<5.0) ATS decomposes to form elemental sulfur (S) according to the reaction:

**(NH₄)₂S₂O₃ (aq) -> S (s) + SO₂ (aq) + 2NH₃ (aq) + H₂O (l)**

The sulphite concentration (ABS and DAS) in the circulating loop is in the range of 2.0 - 10.0 wt%. If the sulphite concentration (ABS and DAS) rises above 10.0 wt%, precipitation of DAS in the form of crystals as the least soluble component of the circulating solution may occur, which may result in clogging of the valves with the consequent decrease in the flow of circulating solutions.

The unreacted SO₂ as an unreacted flue gas stream from **T-5** enters the residual SO₂ absorber **T-6** as **stream 08,** where residual SO₂ is absorbed to residual water **stream 20.** Alternatively, this can be treated in any conventional flue gas treatment - i.e power plant FGD as a side stream. The exhaust gas **stream 09** composition at the outlet of the absorber shall comply with the environmental limits for SO₂.

## Claims

1. A method for producing ammonium thiosulfate comprising the steps of
a) contacting in a first reactor (T-1) a first gas stream (01) comprising hydrogen sulphide and ammonia with a first circulating aqueous solution comprising ammonium bisulphite and diammonium sulphite to produce a first aqueous effluent solution (15) comprising ammonium thiosulfate and a first flue gas stream (02) comprising residual hydrogen sulphide and ammonia from said first gas stream (01)
b) contacting in a second reactor (T-2) the first flue gas stream (02) with a third aqueous solution comprising ammonium bisulphite, diammonium sulphite and ammonia to produce a second aqueous solution (17) comprising ammonium thiosulfate, ammonium bisulphite, diammonium sulphite and ammonia, and a second flue gas stream (03)
c) combusting in a third reactor (T-3) the second flue gas stream (03) of step b) and a second gas stream (04) comprising hydrogen sulphide to produce a third flue gas stream (07) comprising SO₂ with N₂ and NOₓ;
d) contacting in a fourth reactor (T-5) the third flue gas stream (07) of step c) with said second aqueous solution (17) to produce a second aqueous effluent solution (10) comprising ammonium bisulphite and diammonium sulphite, wherein one part of the second aqueous effluent solution (13) is fed into the first reactor (T-1) and one part of the second aqueous effluent solution (12) is mixed with ammonia (19) to produce said third aqueous solution, which is flowed into said second reactor (T-2), and wherein said first aqueous effluent solution (15) is at least partially used as the first circulating aqueous solution.

2. The method of any one of claims 1 to 10, wherein said ammonia used in step d) is aqueous ammonia.

3. The method of claim 1 or 2, wherein the first gas stream (01) is contacted with the first aqueous solution using a nozzle or absorber.

4. The method of any one of claims 1 to 3, wherein the third flue gas stream (07) is contacted with the second aqueous solution (17) using a nozzle or absorber.

5. The method of any one of claims 1 to 4, wherein step a) is performed at a temperature from 30°C to 95°C, preferably from 50°C to 90°C, more preferably from 55°C to 70°C.

6. The method of any one of claims 1 to 5, wherein the first gas stream (01) comprises or consists of hydrogen sulphide and ammonium from sour water stripper gas (SWSG).

7. The method of any one of claims 1 to 6, wherein the second gas stream (04) comprises hydrogen sulphide from amine gas (AG).

8. The method of any one of claims 1 to 7, wherein the third flue gas stream (07) is contacted with the second aqueous solution (17) using an SO₂ absorber.

9. The method of any one of claims 1 to 8, wherein the pH of the second aqueous solution (17) is in the range of 5.0 to 7.0, preferably 6.0 to 7.0.

10. The method of any one of claims 1 to 9, wherein the first aqueous effluent solution (15) comprises ammonium thiosulfate in a concentration of 40 wt% to 60 wt%, preferably 50 wt% to 60 wt%.

11. The method of any one of claims 1 to 10, wherein the first aqueous effluent solution (15) comprises ammonium bisulphite and diammonium sulphite in a concentration of 0.5 wt% to 10 wt%, preferably 1.5 wt% to 5 wt%, more preferably 2 wt% to 8 wt%.

12. The method of any one of claims 1 to 11, wherein the first aqueous effluent solution (15) has a pH ranging from 6 to 8, preferably from 6 to 7.

## Patentansprüche

1. Verfahren zum Herstellen von Ammoniumthiosulfat, umfassend die folgenden Schritte:
a) das Inkontaktbringen eines ersten Gasstroms (01), der Schwefelwasserstoff und Ammonium umfasst, mit einer ersten zirkulierenden wässrigen Lösung, die Ammoniumbisulfit und Diammoniumsulfit umfasst, in einem ersten Reaktor (T-1), um eine erste wässrige Abflusslösung (15), die Ammoniumthiosulfat umfasst, und einen ersten Rauchgasstrom (02), der restlichen Schwefelwasserstoff und Ammonium aus dem ersten Gasstrom (01) umfasst, herzustellen;
b) das Inkontaktbringen des ersten Rauchgasstroms (02) mit einer dritten wässrigen Lösung, die Ammoniumbisulfit, Diammoniumsulfit und Ammoniak umfasst, in einem zweiten Reaktor (T-2), um eine zweite wässrige Lösung (17), die Ammoniumthiosulfat, Ammoniumbisulfit, Diammoniumsulfit und Ammoniak umfasst, und einen zweiten Rauchgasstrom (03) herzustellen,
c) das Verbrennen des zweiten Rauchgasstroms (03) von Schritt b) und eines zweiten Gasstroms (04), der Schwefelwasserstoff umfasst, in einem dritten Reaktor (T-3), um einen dritten Rauchgasstrom (07) herzustellen, der SO₂ mit N₂ und NOₓ umfasst,
d) das Inkontaktbringen des dritten Rauchgasstroms (07) von Schritt c) mit der zweiten wässrigen Lösung (17) in einem vierten Reaktor (T-5), um eine zweite wässrige Abflusslösung (10), die Ammoniumbisulfit und Diammoniumsulfit umfasst, herzustellen, wobei ein Teil der zweiten wässrigen Abflusslösung (13) in den ersten Reaktor (T-1) eingespeist wird und ein Teil der zweiten wässrigen Abflusslösung (12) mit Ammoniak (19) gemischt wird, um die dritte wässrige Lösung herzustellen, die in den zweiten Reaktor (T-2) geleitet wird, und wobei die erste wässrige Abflusslösung (15) zumindest teilweise als erste zirkulierende wässrige Lösung verwendet wird.

2. Verfahren nach einem der Ansprüche 1 bis 10, wobei das in Schritt d) verwendete Ammoniak wässriges Ammoniak ist.

3. Verfahren nach Anspruch 1 oder 2, wobei der erste Gasstrom (01) unter Verwendung einer Düse oder eines Absorbers mit der ersten wässrigen Lösung in Kontakt gebracht wird.

4. Verfahren nach einem der Ansprüche 1 bis 3, wobei der dritte Rauchgasstrom (07) unter Verwendung einer Düse oder eines Absorbers mit der zweiten wässrigen Lösung (17) in Kontakt gebracht wird.

5. Verfahren nach einem der Ansprüche 1 bis 4, wobei Schritt a) bei einer Temperatur von 30°C bis 95°C, vorzugsweise von 50°C bis 90°C, stärker bevorzugt von 55°C bis 70°C, durchgeführt wird.

6. Verfahren nach einem der Ansprüche 1 bis 5, wobei der erste Gasstrom (01) Schwefelwasserstoff und Ammonium aus Sauerwasser-Strippergas (SWSG) umfasst oder daraus besteht.

7. Verfahren nach einem der Ansprüche 1 bis 6, wobei der zweite Gasstrom (04) Schwefelwasserstoff aus Amingas (AG) umfasst.

8. Verfahren nach einem der Ansprüche 1 bis 7, wobei der dritte Rauchgasstrom (07) unter Verwendung eines SO₂-Absorbers mit der zweiten wässrigen Lösung (17) in Kontakt gebracht wird.

9. Verfahren nach einem der Ansprüche 1 bis 8, wobei der pH-Wert der zweiten wässrigen Lösung (17) im Bereich von 5,0 bis 7,0, vorzugsweise von 6,0 bis 7,0, liegt.

10. Verfahren nach einem der Ansprüche 1 bis 9, wobei die erste wässrige Abflusslösung (15) Ammoniumthiosulfat in einer Konzentration von 40 Gew.-% bis 60 Gew.-%, vorzugsweise von 50 Gew.-% bis 60 Gew.-%, umfasst.

11. Verfahren nach einem der Ansprüche 1 bis 10, wobei die erste wässrige Abflusslösung (15) Ammoniumbisulfit und Diammoniumsulfit in einer Konzentration von 0,5 Gew.-% bis 10 Gew.-%, vorzugsweise von 1,5 Gew.-% bis 5 Gew.-%, stärker bevorzugt von 2 Gew.-% bis 8 Gew.-%, umfasst.

12. Verfahren nach einem der Ansprüche 1 bis 11, wobei die erste wässrige Abflusslösung (15) einen pH-Wert im Bereich von 6 bis 8, vorzugsweise von 6 bis 7, aufweist.

## Revendications

1. Procédé de production de thiosulfate d'ammonium, comprenant les étapes consistant à
a) mettre en contact dans un premier réacteur (T-1) un premier flux de gaz comprenant du sulfure d'hydrogène et de l'ammonium avec une première solution aqueuse en circulation comprenant du bisulfite d'ammonium et du sulfite de diammonium pour produire une première solution aqueuse d'effluent (15) comprenant du thiosulfate d'ammonium et un premier flux de gaz de combustion (02) comprenant du sulfure d'hydrogène résiduel et de l'ammonium à partir dudit premier flux de gaz (01) ;
b) mettre en contact dans un deuxième réacteur (T-2) le premier flux de gaz de combustion (02) avec une troisième solution comprenant du bisulfite d'ammonium, du sulfite de diammonium et de l'ammoniac pour produire une deuxième solution aqueuse (17) comprenant du thiosulfate d'ammonium, du bisulfite d'ammonium, du sulfite de diammonium et de l'ammoniac, et un deuxième flux de gaz de combustion (03) ;
c) brûler dans un troisième réacteur (T-3) le deuxième flux de gaz de combustion (03) de l'étape b) et un deuxième flux de gaz (04) comprenant du sulfure d'hydrogène pour produire un troisième flux de gaz de combustion (07) comprenant du SO₂ avec N₂ et NOₓ ;
d) mettre en contact dans un quatrième réacteur (T-5) le troisième flux de gaz de combustion (07) de l'étape c) avec ladite deuxième solution aqueuse (17) pour produire une deuxième solution aqueuse d'effluent (10) comprenant du bisulfite d'ammonium et du sulfite de diammonium, dans lequel une partie de la deuxième solution aqueuse d'effluent est introduite dans le premier réacteur (T-1) et une partie de la deuxième solution aqueuse d'effluent (12) est mélangée avec de l'ammoniac (19) pour produire ladite troisième solution, qui est amenée à s'écouler dans ledit deuxième réacteur (T-2), et dans lequel ladite première solution aqueuse d'effluent (15) est utilisée au moins partiellement en tant que première solution aqueuse en circulation.

2. Procédé selon l'une quelconque des revendications 1 à 10, dans lequel ledit ammoniac utilisé à l'étape d) est de l'ammoniac aqueux.

3. Procédé selon la revendication 1 ou 2, dans lequel le premier flux de gaz (01) est mis en contact avec la première solution aqueuse en utilisant une buse ou un absorbeur.

4. Procédé selon l'une quelconque des revendications 1 à 3, dans lequel le troisième flux de gaz de combustion (07) est mis en contact avec la deuxième solution aqueuse (17) en utilisant une buse ou un absorbeur.

5. Procédé selon l'une quelconque des revendications 1 à 4, dans lequel l'étape a) est effectuée à une température de 30°C à 95°C, de préférence de 50°C à 90°C, de manière plus préférée de 55°C à 70°C.

6. Procédé selon l'une quelconque des revendications 1 à 5, dans lequel le premier flux de gaz (01) comprend ou consiste en du sulfure d'hydrogène et de l'ammonium à partir de gaz de strippage d'eau acide (SWSG).

7. Procédé selon l'une quelconque des revendications 1 à 6, dans lequel le second flux de gaz (04) comprend du sulfure d'hydrogène provenant d'un gaz aminé (AG).

8. Procédé selon l'une quelconque des revendications 1 à 7, dans lequel le troisième flux de gaz de combustion (07) est mis en contact avec la deuxième solution aqueuse (17) en utilisant un absorbeur de SO².

9. Procédé selon l'une quelconque des revendications 1 à 8, dans lequel le pH de la deuxième solution aqueuse (17) est dans la plage de 5,0 à 7,0, de préférence de 6,0 à 7,0.

10. Procédé selon l'une quelconque des revendications 1 à 9, dans lequel la première solution aqueuse d'effluent (15) comprend du thiosulfate d'ammonium en une concentration de 40 % en poids à 60 % en poids, de préférence de 50 % en poids à 60 % en poids.

11. Procédé selon l'une quelconque des revendications 1 à 10, dans lequel la première solution aqueuse d'effluent (15) comprend du bisulfite d'ammonium et du sulfite de diammonium en une concentration de 0,5 % en poids à 10 % en poids, de préférence de 1,5 % en poids à 5 % en poids, de manière plus préférée de 2 % en poids à 8 % en poids.

12. Procédé selon l'une quelconque des revendications 1 à 11, dans lequel la première solution aqueuse d'effluent (15) présente un pH allant de 6 à 8, de préférence de 6 à 7.
